# EUROPEAN PATENT SPECIFICATION

(11) **EP 1 908 787 B1**
(45) Date of publication and mention of the grant of the patent: **25.08.2010**
(21) Application number: 06768098.3
(22) Date of filing: 11.07.2006
(51) Int. Cl.: C08F 255/00, C08F 293/00, C08L 51/06

(54) **POLYOLEFIN HYBRID POLYMER AND PROCESS FOR PRODUCTION THEREOF**
POLYOLEFINHYBRIDPOLYMER UND HERSTELLUNGSVERFAHREN DAFÜR
POLYMERE POLYOLEFINIQUE HYBRIDE ET SON PROCEDE DE FABRICATION

(30) Priority: 12.07.2005 JP 2005203206
(43) Date of publication of application: 09.04.2008
(73) Proprietor: Mitsui Chemicals, Inc., Tokyo 105-7117 (JP)
(72) Inventor: KANEKO, Hideyuki, c/o MITSUI CHEMICALS, INC., Sodegaura-shi, Chiba 2990265 (JP); KOJOH, Shinichi, c/o MITSUI CHEMICALS, INC., Tokyo 1057117 (JP); KAWAHARA, Nobuo, c/o MITSUI CHEMICALS, INC., Sodegaura-shi, Chiba 2990265 (JP); MATSUO, Shingo, c/o MITSUI CHEMICALS, INC., Sodegaura-shi, Chiba 2990265 (JP); MATSUGI, Tomoaki, c/o MITSUI CHEMICALS, INC., Sodegaura-shi, Chiba 2990265 (JP); KASHIWA, Norio, c/o MITSUI CHEMICALS, INC., Sodegaura-shi, Chiba 2990265 (JP)
(74) Representative: Benson, John Everett
(86) International application number: PCT/JP2006/313785
(87) International publication number: WO 2007/007762

(56) References cited:
- WO-A1-01/19881
- WO-A1-03/054043
- JP-A- 2004 137 375
- JP-A- 2005 048 172
- US-A1- 2004 225 054

## Description

### TECHNICAL FIELD

The present invention relates to a polyolefin hybrid polymer composed of a polyolefin segment and a polar polymer segment and a method for manufacturing the polyolefin hybrid polymer. More specifically, the present invention relates to a polyolefin hybrid polymer in which a polar polymer segment that is a branch section is formed by a radical reaction and a method for manufacturing the polyolefin hybrid polymer.

### BACKGROUND ART

Polyolefins such as polyethylene and polypropylene are excellent in physical properties and working properties as well as being light and low-price. However, in the case in which enhanced functionalities such as a printing property, a coating property, an adhesive property, a heat resisting property, a resistance to impact, a hydrophilic property, a stimuli-sensitive property, and a mutual receptivity with polymer having another polarity are imparted to polyolefin, a high chemical stability thereof obstructs an impartation of the enhanced functionalities. As a method for imparting functionalities to polyolefin to make up the weak points, for instance, a method for copolymerizing ethylene and a monomer containing a polar group such as vinyl acetate or methacrylic acid ester by a high pressure radical polymerization method and a method for grafting a monomer containing a polar group such as maleic anhydride to polyolefin under the existence of peroxide are widely used in general. Moreover, Japanese Patent Application Laid-Open Publication No. H8-109218 discloses a method for modifying a terminal of polyolefin obtained by a polymerization, and Japanese Patent Application Laid-Open Publication No. 2002-145944 and the like disclose a method for copolymerizing olefin and a monomer containing a polar group. By the methods, polyolefin containing polar groups of many kinds can be obtained. However, a content of polar groups existing in polyolefin obtained by the methods is small in general. In addition, monomers containing a polar group exist independently each other in an olefin chain, or only several chains of monomers containing a polar group exist in most cases if the chains of monomers exist. Consequently, a coating property, an adhesive property and a compatibility with other resins having polarity are insufficient in some cases.

As a method for solving such problems, there can be mentioned a method for manufacturing a polyolefin hybrid polymer composed of so-called a polar polymer segment, in which monomers containing a polar group are chained, and a polyolefin segment.

As a method for manufacturing such a polymer, for instance, WO 98/02472 discloses a method for manufacturing a block polymer by carrying out a radical polymerization of a monomer such as methyl methacrylate while utilizing polyolefin containing alkyl boron wherein the boron containing group is converted to peroxide.

Japanese Patent Application Laid-Open Publication No. 2004-131620 filed by the present applicant discloses a method for carrying out a radical polymerization of a monomer containing a polar group such as methyl methacrylate by converting a polar group in polyolefin obtained by a copolymerization of olefin and a monomer containing a polar group to a radical polymerization initiator.

Among the above methods, the method for utilizing polyolefin containing alkyl boron requires a modification of an unsaturated bond in polyolefin using a special boron compound or a copolymerization of an olefin with an olefin containing boron to introduce a boron compound into polyolefin. In consideration of the costly boron compound and the required processes of the modification and the copolymerization, it is hard to say that the method is suitable industrially from a view point of a cost . Moreover, chemically unstable peroxide is used as a polymerization initiating point. Consequently, a progress of a polymerization is frequently uneven and it is hard to adjust a polar polymer segment to be obtained to have a desired degree of polymerization and a desired molecular weight. On the other hand, in the method for converting a polar group in polyolefin obtained by a copolymerization of an olefin and a monomer containing a polar group to a radical polymerization initiator, a radical polymerization processes in a polymerization mode comparatively controlled such as so-called an atom transfer radical polymerization and a nitroxide mediated radical polymerization. Consequently, the above problems such as a nonuniform polymerization reaction and a hard control of a degree of polymerization and a molecular weight for a polar polymer to be obtained can be solved. However, a special metallocene catalyst must be used and alkyl aluminum must be added in quantity in order to manufacture copolymer of an olefin and a monomer containing a polar group being a material of a radical polymerization initiator. In addition, a polymerization under the existence of a monomer containing a polar group causes a productivity to be lower. Therefore, a method for more simply converting a polyolefin to a radical polymerization initiator is desired.
Patent document 1: Japanese Patent Application Laid-Open Publication No. H8-109218
Patent document 2: Japanese Patent Application Laid-Open Publication No. 2002-145944
Patent document 3: WO 98/02472
Patent document 4: Japanese Patent Application Laid-Open Publication No. 2004-131620

### DISCLOSURE OF THE INVENTION

### PROBLEMS TO BE SOLVED BY THE INVENTION

The present invention was made in consideration of the above problems of the conventional arts, and an object of the present invention is to provide a new polyolefin hybrid polymer composed of a polyolefin segment and a polar polymer segment, and a method for manufacturing the hybrid polymer by an industrially advantageous procedure.

### MEANS FOR SOLVING THE PROBLEMS

A polyolefin hybrid polymer composed of a polyolefin segment and a polar polymer segment and a method for manufacturing the polyolefin hybrid polymer in accordance with the present invention, wherein the polyolefin hybrid polymer is a modified compound of maleic polyolefin (A) selected from a group composed of the following (A1) and (A2), is characterized by comprising a constitutional unit represented by the following general formula (I):

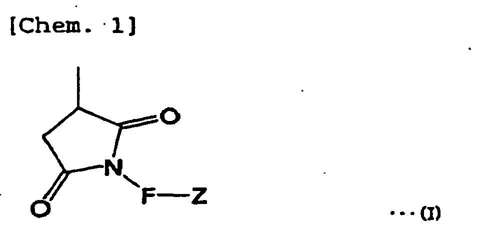

wherein Z represents a polar polymer segment obtainable by polymerizing monomers of at least one kind selected from organic compounds having at least one carbon-carbon unsaturated bond, and F represents a group having an unsaturated group.
(A1) Maleate of a homopolymer or a copolymer of an α-olefin compound represented by CH₂=CH-CₓH₂ₓ₊₁ (x represents 0 or a positive integer number); and
(A2) Maleate of a copolymer of an α-olefin compound represented by CH₂=CH-CₓH₂ₓ₊₁ (x represents 0 or a positive integer number) and a cyclic olefin represented by the following general formula (II) :

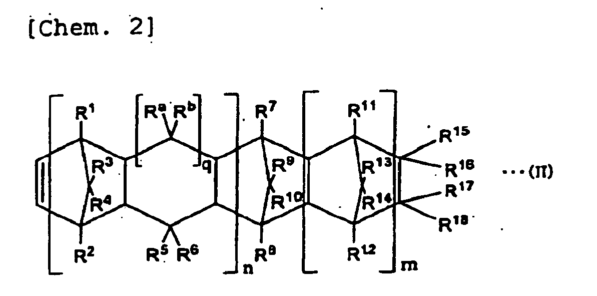

in the general formula (II) n represents 0 or 1, m represents 0 or a positive integer number, q represents 0 or 1, R¹ to R¹⁸, R^{a}, and R^{b} represent an atom or a group selected from a group composed of a hydrogen atom, halogen atoms, and hydrocarbon groups independently of each other, R¹⁵ to R¹⁸ can form a monocyclic ring or a polycyclic ring by combining with each other, a group of the monocyclic or the polycyclic group can include a double bond, and R¹⁵ and R¹⁶ or R¹⁷ and R¹⁸ can form an alkylidene group.
The present invention, which is a method for manufacturing the polyolefin hybrid polymer by carrying out the following sequential processes 1 and 2, can solve the objective of the problems mentioned above:
(Process 1) converting maleic polyolefin (A) to a macro initiator (B) by imparting a group having a radical polymerization initiating ability to the maleic polyolefin (A); and
(Process 2) carrying out a radical polymerization of monomers of at least one kind selected from organic compounds having at least one carbon-carbon unsaturated bond under the existence of the macro initiator (B) obtained in Process 1.
Also provided is a thermoplastic resin composition comprising the polyolefin hybrid polymer of the invention.
Further provided is a film, a sheet, an adhesive resin, a compatibilization agent, a resin modifying agent, a resin addition agent, a filler dispersing agent, or a dispersing element including such a thermoplastic resin composition.
Additionally provided is a film, a sheet, an adhesive resin, a compatibilization agent, a resin modifier, a resin additive, a filler dispersing agent, or a dispersing element including the polyolefin hybrid polymer of the invention.

### EFFECT OF THE INVENTION

A hybrid polymer in accordance with the present invention utilizes a modified compound of maleic polyolefin (A) as the polyolefin segment. The maleic polymer can be used by carrying out malleinization for polyolefin such as polyethylene and polypropylene that are widely used industrially or polymer such as copolymer thereof. The malleinization for the polymer can be easily carried out, thereby having a high degree of freedom for a polyolefin chain.

As the hybrid polymer in accordance with the present invention, maleic modified polyolefin that is put on the market can be used widely.

In accordance with the present invention, the hybrid polymer can be manufactured by an industrially simple method in which a maleimide skeleton polyolefin is used as the macro initiator (B) and a radical polymerization of a radical polymerizable monomer is carried out.

The hybrid polymer in accordance with the present invention has a high chemical stability as a hybrid polymer since an olefin chain and a polar polymer chain are linked to each other by a maleimide linkage.

### BEST MODE OF CARRYING OUT THE INVENTION

The polyolefin hybrid polymer in accordance with the present invention will be described below in detail.

The polyolefin hybrid polymer in accordance with the present invention is a modified compound of maleic polyolefin (A) selected from a group composed of the following (A1) and (A2), and is characterized by comprising a constitutional unit represented by the following general formula (I).

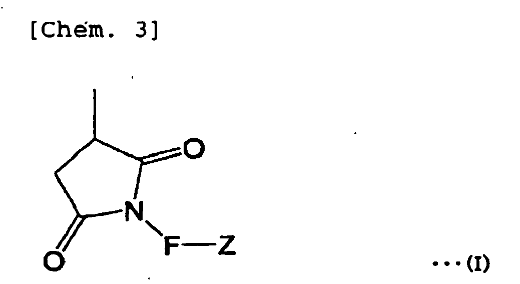

F in the above general formula (I) represents a group having an unsaturated group linked to a polar polymer segment (Z) described later. As an unsaturated group, a carbonyl group, a cyano group, a sulfonyl group, and an aryl group can be mentioned for instance. Among them, a carbonyl group or an aryl group is preferable.

As a bond of the group having an unsaturated group (F) to the polar polymer segment (Z), an unsaturated group included in the group having an unsaturated group (F) is generally linked to the polar polymer segment (Z) in such a manner that one carbon atom is interposed by the unsaturated group. Preferably, the unsaturated group is linked to the polar polymer segment via a methylene group or a methylene group, in which two hydrogen atoms of methylene group are both substituted (hereafter referred to as disubstituted methylene group in some cases). The total number of carbons of such disubstituted methylene group is three to ten in general, preferably for dimethyl methylene group. In the present invention, it is important that a functional group configuration enabling a conjugate structure with the adjacent unsaturated group must be adopted in the case in which a radical occurs on methylene carbon of a methylene group or a disubstituted methylene group. A carbonyl group, a cyano group, a sulfonyl group and an aryl group are preferable as the unsaturated group from such a reason. As the aryl group, there can be mentioned a phenyl group, and a group in which at least one aromatic nucleus hydrogen is substituted by an alkyl group, an alkoxy groups, a nitro groups, an amino groups having 1 to 5 carbon atoms or a halogen atom. As the unsaturated group, a carbonyl group and an aryl group are preferable.
In one embodiment, the group represented by F contains a group selected from a carbonyl group, a cyano group, a sulfonyl group, and an aryl group in the general formula (I), and the unsaturated group is linked to a polar polymer segment (Z) in such a manner that one carbon atom is interposed.

The group having an unsaturated group (F) in the above general formula (I) can contain a heteroatom or a group having a heteroatom. As the heteroatom, an oxygen atom, a nitrogen atom, a sulfur atom, a silicon atom, and a phosphorus atom can be mentioned for instance. Among them, an oxygen atom is preferable. As the group having a heteroatom, ester groups, amide groups, ketone groups, urethane groups and thioester group can be mentioned for instance. Among them, ester groups are preferable in particular.

A preferable mode in a constitutional unit represented by the above general formula (I) is shown by a chemical formula in the following.

[An example of a constitutional unit represented by the above general formula (I)]

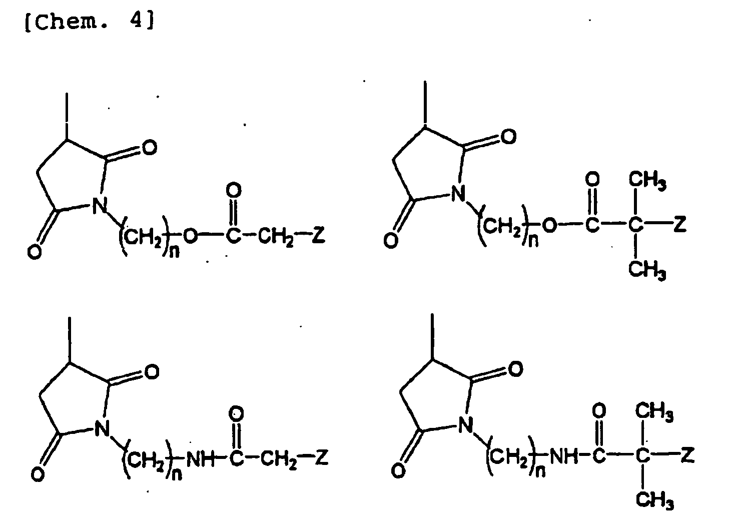

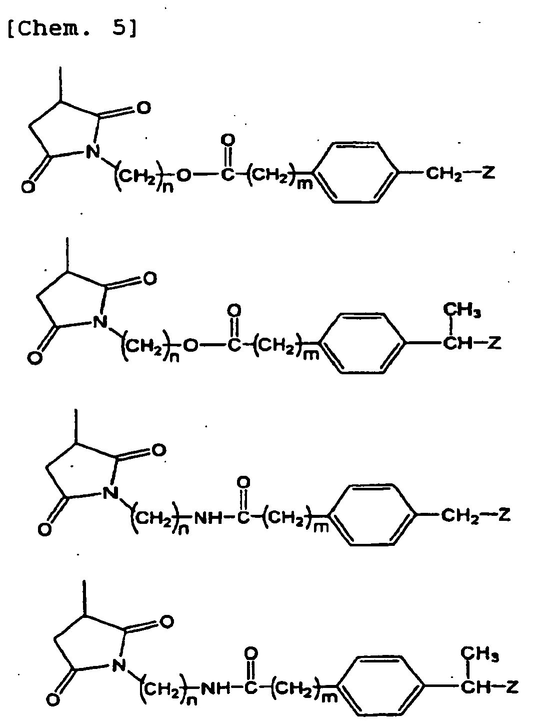

In the above formulae, n represents an integer number in the range of 1 to 15, and m represents an integer number in the range of 0 to 15.

The polar polymer segment (Z) in the above general formula (I) represents a polar polymer segment that can be obtained by a radical polymerization. The polar polymer segment (Z) will be described later.

### Maleic polyolefin (A)

As maleic polyolefin (A) in accordance with the present invention, the following maleates can be mentioned.
(A1) Maleate of a homopolymer or a copolymer of an α-olefin compound represented by CH₂=CH-CₓH₂ₓ₊₁ (x represents 0 or a positive integer number); and
(A2) Maleate of a copolymer of an α-olefin compound represented by CH₂=CH-CₓH₂ₓ₊₁ (x represents 0 or a positive integer number) and cyclic olefin represented by the following general formula (II) :

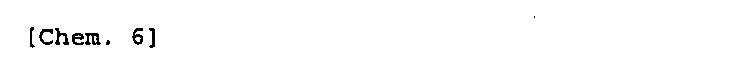

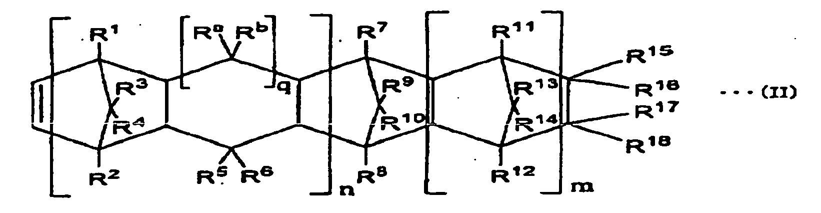

In the above general formula (II), n represents 0 or 1, m represents 0 or a positive integer number, and q represents 0 or 1. In the case in which q is 1, R^{a} and R^{b} each represent the following atom or a hydrocarbon group independently. In the case in which q is 0, atoms for linking are linked to each other to form a five-membered ring.

In the above general formula (II), R¹ to R¹⁸, R^{a}, and R^{b} represent an atom or a group selected from a group composed of a hydrogen atom, halogen atoms, and hydrocarbon groups independently of each other. Here, the halogen atom is a fluorine atom, a chlorine atom, a bromine atom, or an iodine atom. As the hydrocarbon group, there can be mentioned, in general, an alkyl group with the number of carbon atoms in the range of 1 to 20, an halogenated alkyl group with the number of carbon atoms in the range of 1 to 20, and a cyclo alkyl group with the number of carbon atoms in the range of 3 to 15 or an aromatic hydrocarbon group. More specifically, as the alkyl group, there can be mentioned, for instance, a methyl group, an ethyl group, a propyl group, an isopropyl group, an amyl group, a hexyl group, an octyl group, a decyl group, a dodecyl group, and an octadecyl group. As the halogenated alkyl group, a group in which at least part of hydrogen atoms forming the above alkyl group is substituted by a fluorine atom, a chlorine atom, a bromine atom and an iodine atom can be mentioned for instance. As the cyclo alkyl group, a cyclohexyl group can be mentioned for instance. As the aromatic hydrocarbon group, a phenyl group and a naphthyl group can be mentioned for instance.

The above groups can contain a lower alkyl group. In the above general formula (II), R¹⁵ and R¹⁶, R¹⁷ and R¹⁸, R¹⁵ and R¹⁷, R¹⁶ and R¹⁸, R¹⁵ and R¹⁸, or R¹⁶ and R¹⁷ can form a monocyclic or a polycyclic ring by combining with each other (cooperating with each other), and the monocyclic or the polycyclic ring formed as described above can include a double bond. As the monocyclic or the polycyclic ring formed here, the following compounds can be mentioned for instance.

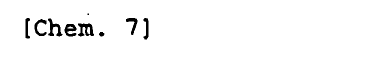

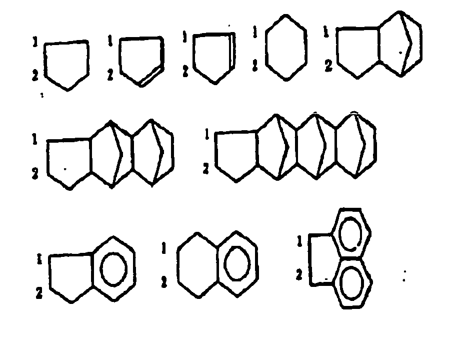

In the above examples, carbon atoms numerically numbered as 1 and 2 represent a carbon atom which R¹⁵ (R¹⁶) or R¹⁷ (R¹⁸) is combined with in the above general formula (II).

Moreover, R¹⁵ and R¹⁶ or R¹⁷ and R¹⁸ can form an alkylidene group. Such an alkylidene group is an alkylidene group with the number of carbon atoms in the range of 2 to 20 in general. More specifically, as the alkylidene group, there can be mentioned, for instance, an ethylidene group, a propylidene group, and an isopropylidene group.

As the cyclic olefin represented by the above general formula (II), there can be mentioned, for instance, a bicyclo [2.2.1] hept-2-ene derivative, a tricyclo [4.3.0.1^{2,5}] -3-decene derivative, a tricyclo [4.3.0.1^{2,5}] -3-undecene derivative, a tetracyclo [4.4.0.1^{2,5}.1^{7,10}] -3-dodecene derivative, a pentacyclo [7.4.0.1^{2,5}.1^{9,12}.0^{8,13}] -3-pentadecene derivative, a pentacyclo [6.5.1.1^{3,6}.0^{2,7}.0^{9,13}] -4-pentadecene derivative, a pentacyclo [8.4.0.1^{2,3}.1^{9,12}.0^{8,13}] -3-hexadecene derivative, a pentacyclo [6.6.1.1^{3,6}.0^{2,7}.0^{9,14}] -4-hexadecene derivative, a pentacyclo pentadecadiene derivative, a hexacyclo [6.6.1.1^{3,6}.1^{10,13}.0^{2,7}.0^{9,14}] -4-heptadecene derivative, a heptacyclo
[8.7.0.1^{3,6}.1^{10,17}.1^{12,15}.0^{2,7}.0^{11,16}] -4-eicosene derivative, a heptacyclo-5-eicosene derivative, a heptacyclo
[8_{'}.8.0.1^{4,7}.1^{11,18}.1^{13,16}.0^{3,8}.0^{12,17}] -5-heneicosene derivative, an octacyclo [8.8.0.1^{2,9}.1^{4,7}.1^{11,18}.1^{13,16}.0^{3,8}.0^{12,17}]-5-docosene derivative, a nonacyclo
[10.9.1.1^{4,7}.1^{13,20}.1^{15,18}.0^{3,8}.0^{2,10}.0^{2,10}.0^{12,21}.0^{14,19}] -5-pentacosene derivative and a nonacyclo
[0.10.1.1.1^{5,8}.1^{14,21}.1^{16,19}.0^{2,11}.0^{4,9}.0^{13,22}.0^{15,20}]-5-hexacosene derivative.

The cyclic olefin represented by the above general formula (II) can be manufactured by the Diels-Alder reaction of cyclopentadien and olefins having the corresponding structure. The cyclic olefin can be used independently or by combining at least two kinds to each other.

### Maleate (A1) of a homopolymer or a copolymer of an α-olefin compound represented by CH₂=CH-CₓH₂ₓ₊₁ (x represents 0 or a positive integer number)

For maleate (A1) of a homopolymer or a copolymer of an α-olefin compound represented by CH₂=CH-CₓH₂ₓ₊₁ (x represents 0 or a positive integer number) to be used in the present invention, as the α-olefin compound represented by CH₂=CH-CₓH₂ₓ₊₁ (x represents 0 or a positive integer number), there can be mentioned, for instance, ethylene, propylene, and linear type or branched type α-olefin with the number of carbon atoms in the range of 4 to 20 such as 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene and 1-eicosene. Among the above listed olefins, it is preferable to use olefin of at least one kind selected from ethylene, propylene, 1-butene, 1-hexene, 4-methyl-1-pentene and 1-octene.

The maleate (A1) of a homopolymer or a copolymer of an α-olefin compound represented by CH₂=CH-CₓH₂ₓ₊₁ (x represents 0 or a positive integer number) used in the present invention is not restricted in particular in the case in which the maleate is obtained from a polymer obtained by a homopolymerization or a copolymerization of the α-olefin compound by a publicly known method. More specifically, there can be mentioned, for instance, maleate of an ethylene polymer such as low density polyethylene, intermediate density polyethylene, high density polyethylene, linear low density polyethylene and ultra high molecular weight polyethylene, maleate of a propylene polymer such as propylene homopolymer, propylene random copolymer and propylene block copolymer, maleic polybutene, maleic poly (4-methyl-1-pentene), maleic poly (1-hexene), maleic ethylene propylene copolymer, maleic ethylene butene copolymer, maleic ethylene hexene copolymer, maleic ethylene octene copolymer, maleic ethylene (4-methyl-1-pentene) copolymer, maleic propylene butene copolymer, maleic propylene (4-methyl-1-pentene) copolymer, maleic propylene hexene copolymer, and maleic propylene octene copolymer.

### Maleate (A2) of copolymer of an α-olefin compound represented by CH₂=CH-CₓH₂ₓ₊₁ (x represents 0 or a positive integer number) and cyclic olefin represented by the general formula (II)

For the maleate (A2) of copolymer of an α-olefin compound represented by CH₂=CH-CₓH₂ₓ₊₁ (x represents 0 or a positive integer number) and cyclic olefin represented by the general formula (II) to be used in the present invention, as an α-olefin compound represented by CH₂=CH-CₓH₂ₓ₊₁ (x represents 0 or a positive integer number), compounds similar to ones described in the item of the above (A1) can be mentioned for instance. A constitutional unit that is induced from the cyclic olefin is represented by the following general formula (III).

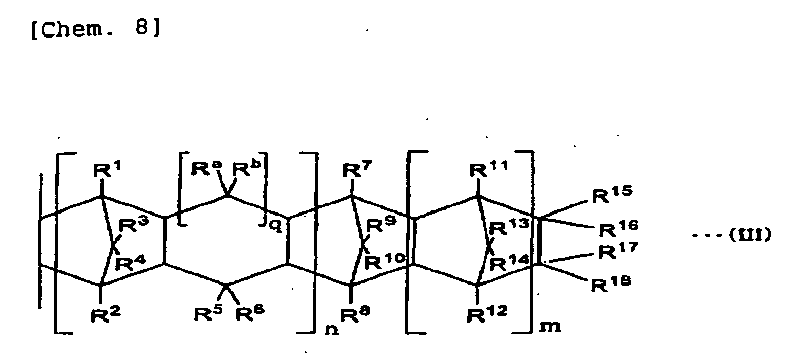

In the above general formula (III), terms n, m, q, R¹ to R¹⁸, R^{a}, and R^{b} represent elements equivalent to those illustrated in the formula (II).

The conditions and the methods for manufacturing polyolefin that is a precursor of maleic polyolefins (A) represented by (A1) and (A2) to be used in the present invention are not restricted in particular. For instance, there can be used a method such as a coordinated anion polymerization using a publicly known transition metal catalyst such as the Ziegler Natta catalyst, a metallocene catalyst, and post metallocene catalyst, and a radical polymerization under a high pressure or a radiation exposure.

Moreover, the conditions and a method to obtain a maleate from the polyolefin are not restricted in particular. Maleate can be manufactured by a method such as a publicly known graft modification method, a method of a reaction of polyolefin and maleic anhydride without a solvent medium using an extrusion processing machine, and a method of a reaction of polyolefin dissolved in a suitable solvent medium and maleic anhydride.

In the present invention, as the maleic polyolefin (A) to be denatured, a resin selected from a group composed of the above (A1) and (A2) is used, and resins of at least two kinds can also be combined to be used.

### Polar polymer segment (Z)

A polar polymer segment (Z) that configures a hybrid polymer in accordance with the present invention is a polymer of a monomer that can be polymerized by a radical reaction. More specifically, a homopolymer or a copolymer of a monomer of at least one kind selected from organic compounds having at least one carbon-carbon unsaturated bond can be mentioned for instance. As the monomer of at least one kind selected from organic compounds having at least one carbon-carbon unsaturated bond used in the present invention, there can be mentioned, for instance, a (meth) acrylic acid series monomer such as (meth) acrylic acid, methyl (meth) acrylate, ethyl (meth) acrylate, n-propyl (meth) acrylate, isopropyl (meth) acrylate, n-butyl (meth) acrylate, isobutyl (meth) acrylate, tert-butyl (meth) acrylate, n-pentyl (meth) acrylate, n-hexyl (meth) acrylate, cyclohexyl (meth) acrylate, n-heptyl (meth) acrylate, n-octyl (meth) acrylate, 2-ethylhexyl (meth) acrylate, nonyl (meth) acrylate, decyl (meth) acrylate, dodecyl (meth) acrylate, phenyl (meth) acrylate, tolyl (meth) acrylate, benzyl(meth) acrylate, 2-methoxyethyl (meth) acrylate, 3-methoxybutyl (meth) acrylate, 2-hydroxyethyl (meth) acrylate, 2-hydroxypropyl (meth) acrylate, stearyl (meth) acrylate, glycidyl (meth) acrylate, 2-aminoethyl (meth) acrylate, 2-(dimethylamino) ethyl (meth) acrylate, γ-(methacryloyloxypropyl) trimethoxysilane, ethylene oxide adduct of (meth) acrylic acid, trifluoromethyl methyl (meth) acrylate, 2-trifluoromethyl ethyl (meth) acrylate, 2-perfluoroethyl ethyl (meth) acrylate, 2-perfluoroethyl 2-perfluorobutyl ethyl (meth) acrylate, 2-perfluoroethyl (meth) acrylate, perfluoromethyl (meth) acrylate, diperfluoromethyl methyl (meth) acrylate, 2-perfluoromethyl 2-perfluoroethyl methyl (meth) acrylate, 2-perfluorohexylethyl (meth) acrylate, 2-perfluorodecylethyl (meth) acrylate, and 2-perfluorohexadecyl ethyl (meth) acrylate, and a styrene series monomer such as styrene, vinyl toluene, α-methyl styrene, chlorostyrene, styrene sulfonic acid, and salt thereof, and a vinyl series monomer containing fluorine such as perfluoro ethylene, perfluoro propylene, and vinylidene fluoride, and a vinyl series monomer containing silicon such as vinyl trimethoxysilane and vinyl triethoxysilane, maleic anhydride, maleic acid, monoalkyl ester and dialkyl ester of maleic acid, fumaric acid, monoalkyl ester and dialkyl ester of fumaric acid, and a maleimide series monomer such as maleimide, methyl maleimide, ethyl maleimide, propyl maleimide, butyl maleimide, hexyl maleimide, octyl maleimide, dodecyl maleimide, stearyl maleimide, phenyl maleimide, and cyclohexyl maleimide, and a vinyl series monomer containing nitrile group such as acrylonitrile and methacrylonitrile, and a vinyl series monomer containing amide group such as (meth) acrylamide, N-methyl (meth) acrylamide, N-ethyl (meth) acrylamide, N-propyl (meth) acrylamide, N-isopropyl (meth) acrylamide, N-butyl (meth) acrylamide and N,N-dimethyl (meth) acrylamide, and a vinyl ester series monomer such as vinyl acetate, vinyl propionate, vinyl pivalate, vinyl benzoate and vinyl cinnamate, and an olefin series monomer such as ethylene, propylene and butene, and a diene series monomer such as butadiene and isoprene, and vinyl chloride, vinylidene chloride, allyl chloride, and allyl alcohol. The organic compounds can be used independently or by combining at least two kinds to each other.

The polar polymer segment (Z) used in the present invention is not restricted in particular in the case in which the polar polymer segment (Z) is at least one kind of monomer of the above homopolymer or copolymer selected from the organic compounds having at least one carbon-carbon unsaturated bond. There can be mentioned, for instance, a polymer obtained by (co)polymerizing monomers of one or at least two kinds selected from (meth) acrylic acid and a derivative thereof, (meth) acrylonitrile, and styrene and a derivative thereof. More specifically, there can be mentioned, for instance, a homopolymer and a copolymer of (meth) acrylate, styrene, (meth) acrylamide, (meth) acrylonitrile and (meth) acrylic acid. A residue derived from a radical polymerization initiating functional group or a residue derived from a compound added for stopping the polymerization is added to a terminal of Z in some cases.

### Polyolefin hybrid polymer

The polyolefin hybrid polymer in accordance with the present invention is composed of a polyolefin segment of at least one kind and a polar polymer segment of at least one kind, and is a polymer in which a number average molecular weight of each polyolefin segment is in the range of 500 to 1000000 and a number average molecular weight of each polar polymer segment is in the range of 500 to 1000000. The polyolefin hybrid polymer in accordance with the present invention can be composed of a plurality of polyolefin segments and a plurality of polar polymer segments having different compositions and molecular weights. The polyolefin segment in accordance with the present invention has a structure in which a constitutional unit based on succinic anhydride generated by introducing maleic anhydride into polyolefin is subtracted from the above maleic polyolefin (A). The structure is essentially equivalent to a structure in which a constitutional unit represented by the above general formula (I) is subtracted from the polyolefin hybrid polymer in accordance with the present invention.

### Method for manufacturing the polyolefin hybrid polymer

The polyolefin hybrid polymer in accordance with the present invention is manufactured by carrying out the sequential steps of the following (process 1) and (process 2):
(Process 1) converting maleic polyolefin (A) to a macro initiator (B) by imparting a group provided with a radical polymerization initiating ability to the maleic polyolefin (A); and
(Process 2) carrying out a radical polymerization of monomers of at least one kind selected from organic compounds having at least one carbon-carbon unsaturated bond under the existence of the macro initiator (B) obtained in the (Process 1).

Each process of the manufacturing method in accordance with the present invention will be described below in detail.
The (Process 1) is a process for imparting a group provided with a radical polymerization' initiating ability to the maleic polyolefin (A) . The (Process 1) can be classified into the following two methods.
(Method 1) A method comprising steps of reacting a compound (X1) provided with both an amino group (P) that can be chemically bonded to an acid anhydride group contained in the maleic polyolefin (A) and a functional group (Q) of at least one kind with the maleic polyolefin (A), and subsequently reacting a compound (X2) having both a functional group (R) that can be chemically bonded to the functional group (Q) and a group (S) provided with a radical polymerization initiating ability.
(Method 2) A method comprising a step of reacting a compound (Y) having both an amino group (P) that can be chemically bonded to an acid anhydride group contained in the maleic polyolefin (A) and a group (S) provided with a radical polymerization initiating ability.

In the (Method 1), as an amino group (P), so-called a primary amino group in which two hydrogen atoms are linked to a nitrogen atom can be mentioned for instance. In addition, as the functional group (Q), there can be mentioned, for instance, a hydroxyl group, a carboxylic acid group, an ester group, a silanol group, an amino group and an acid anhydride group.

The functional group (R) is not restricted in particular if the functional group (R) is a functional group that can be chemically bonded to the functional group (Q) . As a functional group (R), there can be mentioned, for instance, an alcoholic hydroxyl group, a phenolic hydroxyl group, an amino group, a carboxylic acid group, an ester group, an alkyl halide group, an acid anhydride group, and a carboxylic acid halide group. As the group (S) provided with a radical polymerization initiating ability, there can be mentioned, for instance, a compound used in so-called a nitroxide mediated radical polymerization method for linking a group provided with nitroxide and for generating a radical by a thermal cleavage as disclosed in Chem. Rev., 101, 3661 (2001), and a compound used in so-called an atomic transfer radical polymerization method as disclosed in Chem. Rev., 101, 2921 (2001) or Chem. Rev., 101, 3689 (2001). More specifically, there can be mentioned, for instance, a compound such as a 2,2, 6, 6-tetramethyl piperidinyl-1-oxy (TEMPO) group, a 4-hydroxy-2,2,6,6-tetramethyl piperidinyl-1-oxy group, a 2,2,5,5-tetramethyl-1-pyrrolidinyl oxy group, a 3-amino-2,2,5,5-tetramethyl-1-pyrrolidinyl oxy group, a 3-carboxy-bromo group, a 2,2,5,5-tetramethyl-1-pyrrolidinyl oxy group, a di-t-butylnitroxy group, a bromo group, and a chloro group. Among them, a 2, 2, 6, 6-tetramethyl piperidinyl-1-oxy (TEMPO) group, a chloro group, and a bromo group are preferable.

As the compound (X1) provided with both an amino group (P) and a functional group (Q), there can be mentioned, for instance, a compound provided with an amino group and a hydroxyl group in a molecule such as ethanolamine, 6-amino-1-hexanol, 2-amino-2-methyl-1-propanol, 1-amino-2-propanol, 3-amino-1-propanol, 2-(2-amino ethoxy) ethanol, 2-aminophenol, 3-aminophenol, 4-aminophenol, 2-amino benzyl alcohol, 3-amino benzyl alcohol, 4-amino benzyl alcohol, tyramine, 2-amino-2-methyl-1, 3-propanediol, 2-amino-2-ethyl-1, 3-propanediol, tris (hydroxymethyl) aminomethane and 1, 3-diamino-2-propanol, and a compound provided with an amino group and a carboxyl group in a molecule such as alanine, β-alanine, glycine, lysine, phenylalanine, aspartic acid, 2-aminobenzoic acid, 3-aminobenzoic acid, 4-aminobenzoic acid, 11-aminoundecanoic acid, glutamic acid, 4-aminobutyric acid, 6-aminocaproic acid, norvaline, valine and 4-(aminomethyl) benzoic acid, and a compound provided with an amino group, a hydroxyl group and a carboxyl group in a molecule such as tyrosine and serine, and a compound provided with an amino group and a silanol group in a molecule such as aminopropyl silanetriol, and a compound provided with a plurality of amino groups in a molecule such as ethylenediamine, 1,6-hexamethylene diamine, triethylene triamine, tetraethylene triamine, o-phenylenediamine, m-phenylenediamine, p-phenylenediamine, 4,4'-methylenedianiline, o-xylylenediamine, m-xylylenediamine, p-xylylenediamine, 1,2-diaminopropane, 1,3-propanediamine and melamine. Among them, a compound provided with an amino group and a hydroxyl group in a molecule and a compound provided with a plurality of amino groups in a molecule are preferable. Moreover, ethanolamine, 6-amino-1-hexanol, ethylenediamine, 1,6-hexamethylene diamine are more preferable.

As the compound (X2) including both a functional group (R) that can be chemically bonded to the functional group (Q) and a group (S) provided with a radical polymerization initiating ability, a structure shown in the following can be mentioned for instance.

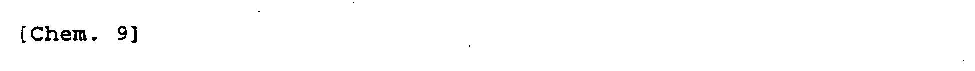

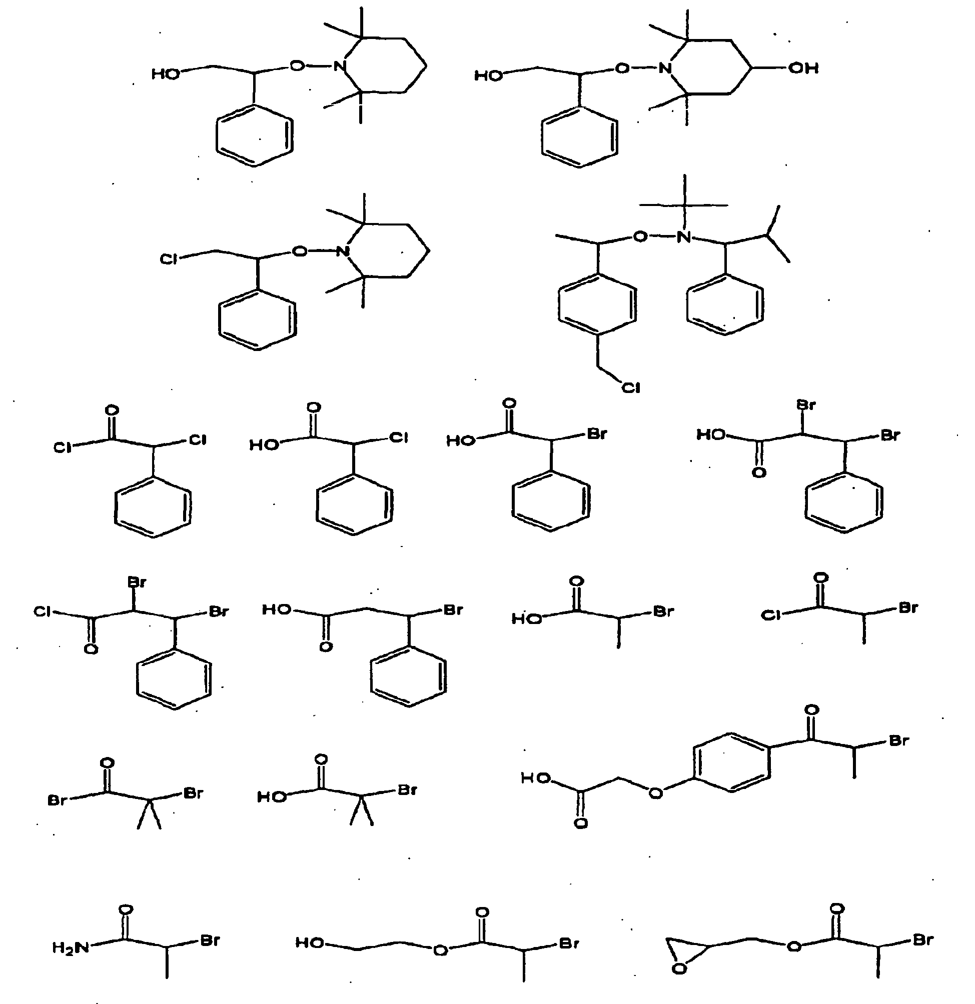

As the conditions of a reaction of the maleic polyolefin (A) to the compound (X1) provided with both an amino group (P) and a functional group (Q), a dehydration organic solvent medium can be used in general, and a reaction is carried out in a hydrocarbon organic solvent medium having a high affinity with polyolefin such as toluene, benzene, hexane and heptane at a temperature in the range of 0°C to 120°C. Although a reaction can be homogeneous or heterogeneous, a homogeneous reaction is preferable. In the case in which a reaction is hard to proceed, Bronsted acid such as sulfuric acid, formic acid, and para toluenesulfonic acid, and Lewis acid such as aluminum chloride can be used as a catalyst in some cases. In the case in which water is generated by the reaction, anhydrous magnesium sulfate or molecular sieves are added, or Dean-Stark is used to remove water under the reflux conditions, thereby enabling a reaction to proceed effectively in some cases.

An addition amount of the compound (X1) in the reaction of maleic polyolefin (A) to a compound (X1) provided with both an amino group (P) and a functional group (Q) is generally in the range of 1 to 1000-fold mole, preferably in the range of 1 to 500-fold mole, based on an acid anhydride group existing in maleic polyolefin (A) . A product obtained by the reaction is precipitated by methanol or acetone, filtered, and washed by a solvent medium dissolving the compound (X1). Consequently, an unreacted compound (X1) can be easily removed. As the conditions of a subsequent reaction to the compound (X2) including both a functional group (R) that can be chemically bonded to the functional group (Q) and a group (S) provided with a radical polymerization initiating ability, conditions similar to those of the above reaction of the maleic polyolefin (A) to the compound (X1) provided with both an amino group (P) and the functional group (Q) can be adopted.

In the (Method 2), as the group (S) provided with an amino group (P) and a radical polymerization initiating ability, groups similar to those of the above (Method 1) can be mentioned for instance. As the compound (Y) including both an amino group (P) and a group (S) provided with a radical polymerization initiating ability, a compound shown in the following can be mentioned for instance.

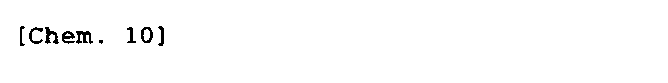

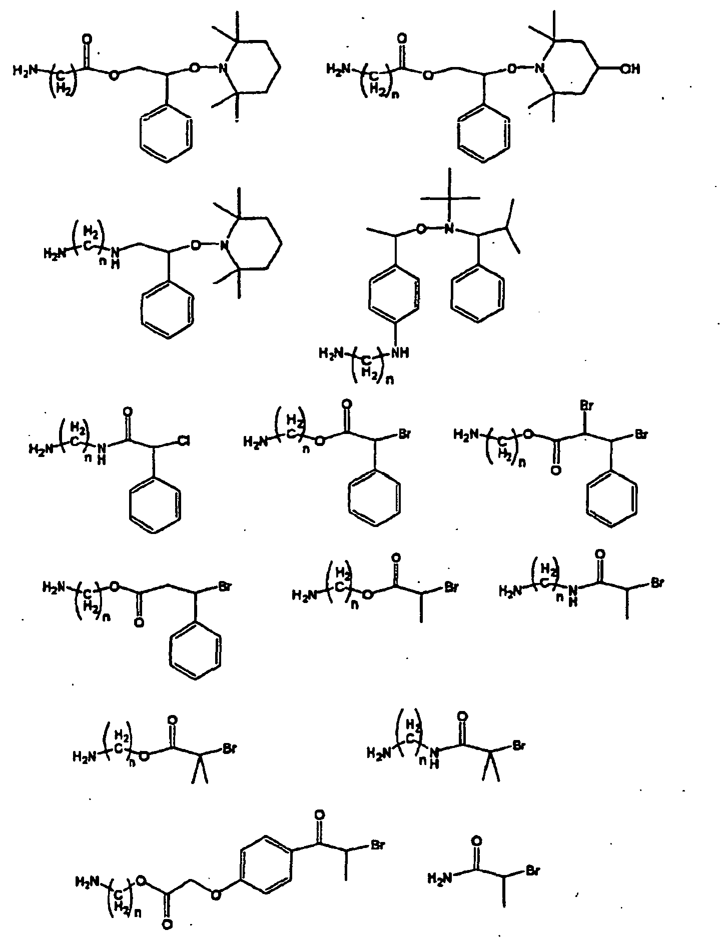

wherein n represents an integer number of 1 or larger.

As the conditions of a reaction of the maleic polyolefin (A) to the compound (Y) provided with both an amino group (P) and a group (S) provided with a radical polymerization initiating ability, conditions similar to those of the above reaction of the maleic polyolefin (A) to the compound (X1) provided with both an amino group (P) and a functional group (Q) can be adopted.

By either of the above methods of (Method 1) and (Method 2), the maleic polyolefin (A) can be converted to the macro initiator (B).

The (Process 2) is a process for imparting a polar polymer segment (Z) to a product obtained in the above (Process 1) by carrying out a radical polymerization of monomers of at least one kind selected from organic compounds having at least one carbon-carbon unsaturated bond under the existence of the macro initiator (B) obtained in the above (Process 1).

As the monomers of at least one kind selected from organic compounds having at least one carbon-carbon unsaturated bond used in a radical polymerization reaction, a compound equivalent to the monomer used in manufacturing the polar polymer segment (Z) can be mentioned for instance.

As the radical polymerization reaction used in the present invention, there can be mentioned, for instance, a nitroxide mediated radical polymerization method and an atomic transfer radical polymerization method described earlier. An atomic transfer radical polymerization in accordance with the present invention is one of living radical polymerization methods, and is a method for carrying out a radical polymerization of a radical polymerizable monomer using a metal complex as a catalyst in which a center metal is a transition metal and an organic halide or a sulfonyl halide compound as an initiator. More specifically, there can be mentioned, for instance, Chem. Rev., 101, 2921 (2001) : Matyjaszewski et al., WO 96/30421, WO 97/18247, WO 98/01480, WO 98/40415, WO 00/156795, Chem. Rev., 101, 3689 (2001): Sawamoto et al., Japanese Patent Application Laid-Open Publications No. H8-41117, No. H9-208616, No. 2000-264914, No. 2001-316410, No. 2002-80523, and No. 2004-307872. As the initiator to be used, organic halide or a sulfonyl halide compound can be mentioned for instance. In particular, a carbon-halogen bond existing at an alpha position of a carbon-carbon double bond or a carbon-oxygen double bond is suitable for a structure as an initiator.

The method for manufacturing a polyolefin hybrid polymer in accordance with the present invention is a method of carrying out a nitroxide mediated radical polymerization of a radical polymerizable monomer using peroxide or an azo initiator under the existence of the above macro initiator (B), or an atomic transfer radical polymerization of a radical polymerizable monomer using a catalyst of a metal complex in which a center metal is a transition metal in principle.

A transition metal complex used as a polymerization catalyst is not restricted in particular. Preferably, the transition metal complex is a metal complex in which a center metal is a element of Group 7, 8, 9, 10 or 11 in the Periodic Table. More preferably, there can be mentioned, for instance, a complex of zero valent copper, monovalent copper, bivalent ruthenium, bivalent iron, or bivalent nickel. Among them, a complex of copper is preferable. More specifically, as a monovalent copper compound, there can be mentioned, for instance, cuprous chloride, cuprous bromide, cuprous iodide, cuprous cyanide, cuprous oxide, and cuprous perchlorate. In the case in which a copper compound is used, 2,2'-bipyridyl or a derivative thereof, 1,10-phenanthroline or a derivative thereof, or polyamine such as tetramethyl ethylenediamine, pentamethyl diethylenetriamine or hexamethyltris (2-aminoethyl) amine is added as a ligand to improve a catalytic activity. Moreover, a tris triphenylphosphine complex (RuCl₂(PPh₃)₃) of bivalent ruthenium chloride is also suitable as a catalyst. In the case in which a ruthenium compound is used as a catalyst, aluminum alkoxides are added as an activating reagent. Moreover, a bis triphenylphosphine complex (FeCl₂(PPh₃)₂) of bivalent iron, a bis triphenylphosphine complex (NiCl₂(PPh₃)₂) of bivalent nickel, and a bis tributylphosphine complex (NiBr₂(PBu₃)₂) of bivalent nickel are also suitable as a catalyst.

A polymerization method is not restricted in particular in the manufacturing method in accordance with the present invention. A bulk polymerization, a solution polymerization, a suspension polymerization, an emulsion polymerization and a bulk suspension polymerization can be adopted. As a solvent medium that can be used in the radical polymerization in accordance with the present invention, any one that does not inhibit the reaction can be used. More specifically, there can be mentioned, for instance, aromatic hydrocarbon solvents such as benzene, toluene, and xylene, aliphatic hydrocarbon solvents such as pentane, hexane, heptane, octane, nonane and decane, alicyclic hydrocarbon solvents such as cyclohexane, methylcyclohexane and decahydronaphthalene, chlorinated hydrocarbon solvents such as chlorobenzene, dichlorobenzene, trichlorobenzene, methylene chloride, chloroform, carbon tetrachloride and tetrachloroethylene, alcoholic solvents such as methanol, ethanol, n-propanol, iso-propanol, n-butanol, sec-butanol and tert-butanol, ketone solvents such as acetone methyl ethyl ketone and methyl isobutyl ketone, ester solvents such as ethyl acetate and dimethyl phthalate, ether solvents such as dimethyl ether, diethyl ether, di-n-amyl ether, tetrahydrofuran and dioxy anisole. Moreover, a suspension polymerization and an emulsion polymerization can be carried out using water as a solvent medium. The solvent medium can be used independently or by combining at least two kinds to each other. Though a phase of the reaction liquid is preferably a uniform phase by using the solvent medium, a plurality of nonuniform phases can also be adopted.

A reaction temperature is not restricted in particular if the reaction temperature is a temperature at which a radical polymerization reaction can proceed. The reaction temperature is not equal depending on a desired degree of polymerization of a polymer, and a kind and an amount of a radical polymerization initiator and a solvent medium to be used. However, the reaction temperature is generally in the range of -100°C to 250°C, preferably in the range of -50°C to 180°C, more preferably in the range of 0°C to 160°C. The reaction can be carried out under any of a decompression, a normal pressure, and pressurization. It is preferable that the above polymerization reaction is carried out in an inert gas atmosphere such as nitrogen and argon.

The polyolefin hybrid polymer generated by the above method can be isolated by using a publicly known method such as an evaporation of a solvent medium and unreacted monomer used in the polymerization or a reprecipitation using a non solvent medium. Moreover, for the obtained monomer, a homo radical polymer that is a by-product can be removed by processing with a polar solvent medium such as acetone and THF while using a Soxhlet extractor.

### Polyolefin hybrid polymer, a thermoplastic resin composition containing the same, and applications thereof

The polyolefin hybrid polymer in accordance with the present invention can be used for many kinds of applications, and can be used for the following applications.

(1) A film and a sheet: A film and a sheet that are made of the polyolefin hybrid polymer in accordance with the present invention are excellent in any of flexibility, transparency, an adhesive property, an anti-fogging property, heating resistance, and a separative property.

(2) A laminate provided with at least one layer made of the polyolefin hybrid polymer in accordance with the present invention: for instance, a film for agriculture, a film for a wrapping, a film for a shrink, a film for a protect, a separating film such as a blood plasma component separating film, and a water selective transmission gasification film, and a preferential segregation film such as an ion exchange membrane, a battery separator, and an optical disaggregating film.

(3) A microcapsule, PTP packaging, a chemical valve, and a drag delivery system.

(4) In the case in which the polyolefin hybrid polymer in accordance with the present invention is used as a modifying agent for a modified resin material, the polyolefin hybrid polymer can have a modification effect such as resistance to impact, a flow property,
a coating property, crystallinity, an adhesive property, and transparency.

In the case in which the polyolefin hybrid polymer in accordance with the present invention is used as a modifying agent for a rubber, the polyolefin hybrid polymer can have a modification effect such as weather resistance, heat resistance, an adhesive property, and oil resistance. As the rubber, there can be mentioned, for instance, crosslinking type rubbers such as a natural rubber (NR), an isoprene rubber (IR), a butadiene rubber (BR), a styrene butadiene rubber (SBR), a chloroprene rubber (CR), an acrylonitrile butadiene rubber (NBR), a butyl rubber (IIR), an ethylene propylene series rubbers (EPM, EPDM), a chlorosulfonic polyethylene (CSM), acrylic rubbers (ACM, ANM etc.), epichlorohydrin rubbers (CO, ECO etc.), a silicone rubber (Q) and fluorine rubbers (FKM etc.); and thermoplastic rubbers such as styrene rubbers, olefin rubbers, urethane rubbers, ester rubbers, amide rubbers and vinyl chloride rubbers.

A modifying agent for lubricating oil: for instance, the polyolefin hybrid polymer in accordance with the present invention can be used for a lubricating oil application such as gasoline engine oil, Diesel engine oil, marine engine oil, gear oil, instrument oil, metal processing oil, motor oil, machine oil, spindle oil and insulating oil, and as a viscosity modifier and a freezing-point depressant. In the case in which the polyolefin hybrid polymer in accordance with the present invention is used as a modifying agent for a wax, the polyolefin hybrid polymer can have a modification effect such as an adhesive property, a flow property, and strength. As the wax, there can be mentioned, for instance, mineral waxes such as a montan wax, a peat wax, an ozokerite ceresin wax and a petroleum wax, synthetic waxes such as polyethylene, a Fischer-Tropsch wax, a chemical modified hydrocarbon wax and a substituted amide wax, and vegetable waxes, and animal waxes.

In the case in which the polyolefin hybrid polymer in accordance with the present invention is used as a modifying agent for cement, the polyolefin hybrid polymer can have a modification effect such as formability and strength. As the cement, there can be mentioned, for instance, air-setting cement such as a lime, a gypsum, and magnesia cement, and hydraulic cement such as roman cement, natural cement, Portland cement, alumina cement, and sulfated slag cement, and special cement such as acid resistant cement, refractory cement, water glass cement, and dental cement.

(5) A viscosity modifier and a formability modification agent: the polyolefin hybrid polymer in accordance with the present invention can be used as a viscosity modifier and a formability modification agent for inks such as a letterpress printing ink, a flat plate printing ink, a flexographic ink, and a rotogravure ink, and viscosity modifiers or formability modification agents for coating compounds such as an oil paint, a cellulose derivative paint, a synthetic resin coating, an aqueous baking paint, a powdery water base paint and a Japanese lacquer (japan).

(6) A building material and a material for civil engineering: there can be mentioned, for instance, a building material and a resin for civil engineering, and a building material and a molded object for civil engineering, such as a floor covering material, a floor tile, a floor sheet, a sound insulating sheet, a heat insulating panel, a vibration proofing material, a decorative sheet, a transverse board, an asphalt modification material, a gasket sealing compound, a roofing sheet, and a water shut off sheet.

(7) An interior and exterior material for an automobile and a gasoline tank: An interior and exterior material for an automobile and a gasoline tank that are made of the multi branched type polymer in accordance with the present invention are excellent in rigidity, resistance to impact, oil resistance, and heat resistance.

(8) An electric insulating material for electric and electronic components; an apparatus and a material for processing an electronic devices: electric and electronic components such as a magnetic recording medium, a binder of a magnetic recording medium, a sealing medium of an electric circuit, a raw material of a home electronics appliance, an apparatus and a material for a container such as a container for a micro wave oven, a film for a micro wave oven, a polymer electrolyte substrate, an electrically conductive alloy substrate; a connector, a socket, a resistor, a relay case switch coil bobbin, a capacitor, a variable capacitor case, an optical pickup, an optical connector, a radiator, terminal boards, a transformer, a plug, a printed wiring board, a tuner, a speaker, a microphone, a headset, a compact motor, a magnetic head base, a power module, a housing, a semiconductor, a liquid crystal display component, an FDD carriage, an FDD chassis, an HDD component, a motor brush holder, a parabolic antenna and a computer related component; and components for a home electronics appliance and a business and office machine such as a VTR component, a television component, an iron, a hair dryer, a rice cooker component, a micro wave oven component, an acoustic apparatus component, components for an audio instrument such as an Audio/Laser Disc (registered trademark), and a compact disc, an illumination component, a refrigerator component, an air conditioner component, a typewriter component, and a word processor component; an office computer related component, a telephone set related component, a facsimile related component, a copying machine related component, an electromagnetic shield material, a speaker cone material and a vibration element for a speaker.

(9) A water-based emulsion: a water-based emulsion containing the polyolefin hybrid polymer in accordance with the present invention can be an adhesive for polyolefin excellent in a heat sealing property.

(10) A coating base: a solvent medium dispersing element containing the polyolefin hybrid polymer in accordance with the present invention is excellent in dispersing stability to a solvent medium and shows an excellent adhesive property in bonding a metal or a polar resin to polyolefin.

(11) A non woven fabric material for a medical care or sanitation, a non woven fabric laminate, an electret, a tube for a medical care, a container for a medical care, an infusion solution bag, a prefill syringe, medical care articles such as an injection syringe, a material for a medical care, an artificial organ, an artificial muscle, a filtering film, a food sanitation and health article, a retortable bag, and a freshness-keeping film.

(12) A stationery product such as a general merchandise desk mat, a cutting mat, a ruler, a penholder, a grip, a cap, a grip of scissors or a cutter, a magnet sheet, a pen case, a paper folder, a binder, a label seal, a tape, and a white board; miscellaneous goods for daily use such as clothes, a curtain, bed sheets, a carpet, an entrance mat, a bath mat, a bucket, a hose, a bag, a planter, a filter of an air conditioner or an exhaust fan, a tableware, a tray, a cup, a lunch box, a funnel for a coffee siphon, a frame of glasses, a container, a storage case, a hanger, a rope, and a washing net; sporting goods such as shoes, goggles, ski, a racket, a ball, a tent, water goggles, flippers, a fishing rod, a cooler box, a leisure sheet, and a net for sports; and a toy such as a block and a card; a container such as a container for a kerosene, an oil drum, and a bottle for a detergent or a shampoo, and displays such as a signboard, a pylon, and a plastic chain.

(13) A filler modifying agent: the polyolefin hybrid polymer in accordance with the present invention can be suitably used for applications such as a filler dispersing property modifying material and an additive for preparing a filler having an improved dispersing property.

(14) A compatibilization agent: the polyolefin hybrid polymer in accordance with the present invention can be used as a compatibilization agent. In the case in which the polyolefin hybrid polymer in accordance with the present invention is used, polyolefin and a thermoplastic resin having a polar group can be mixed at any arbitrary ratio. The polyolefin hybrid polymer in accordance with the present invention is provided with a polyolefin segment and a polar polymer segment. Consequently, components that are originally not mutually compatible can be mixed to each other, and an elongation at break can be extremely improved as compared with the case in which the polyolefin hybrid polymer is not used.

### [Examples]

While the present invention will be described below in detail based on the preferred examples, the present invention is not restricted to the examples.

### [Example 1]

### Manufacture of the polypropylene macro initiator (B)

Maleic polypropylene (an intrinsic viscosity [η] = 0.95 dg/l, a maleic acid content = 0.55 wt%) of 75 g and xylene of 700 ml were put in a glass reaction vessel with an internal volume of 1 L in which a nitrogen substitution was carried out sufficiently, and heated and stirred at 120°C for 2 hours. Subsequently, 2-aminoethanol of 200 ml was added as the compound (X1) to carry out a reaction at 120°C for 6 hours. A reaction liquid was poured into acetone of 2 L, and a deposited polymer was dried under a reduced pressure to obtain white powder type modified polypropylene of 75 g. From a 1H-NMR analysis and IR analysis, it was found that an acid anhydride group was selectively reacted to an amino group and had a ring-closing imide structure. The modified polypropylene of 71 g obtained as described above and toluene of 700 ml were put in a glass reaction vessel with an internal volume of 1 L, and heated and stirred at 105°C for 2 hours. Subsequently, triethylamine of 8.1 ml and 2-bromoisobutyrate bromide of 6.7 ml as the compound (X2) were added to carry out a reaction at 105°C for 2 hours. The reaction liquid was poured into acetone of 2 L, and a deposited polymer was dried under a reduced pressure to obtain light brown powder type modified polypropylene of 71 g. From a 1H-NMR analysis, it was found that a terminal OH group was modified by a 2-bromoiso butyrate group almost quantitatively.

### Styrene and acrylonitrile copolymerization utilizing the macro initiator (B)

The polypropylene macro initiator (B) of 15.3 g obtained as described above and xylene of 35 ml were put in a glass reaction vessel with an internal volume of 500 ml in which a nitrogen substitution was carried out sufficiently, and heated and stirred at 100°C for dissolving. Subsequently, styrene (St) of 33 ml and acrylonitrile (AN) of 13 ml as a monomer to configure a polar polymer segment, copper (I) bromide of 0.14 g as a polymerization catalyst, and N,N,N',N",N"-pentamethyl diethylenetriamine (PMDETA) of 0.42 ml as a co-catalyst were added to the above solution, and a polymerization was carried out at 100°C for 6 hours. The reaction liquid was poured into methanol of 1 L, and a deposited polymer was dried under a reduced pressure to obtain a solid-state polymer of 22.4 g. From a 1H-NMR analysis, it was found that a composition ratio of propylene/St/AN is 79/14/7 (mole%).

### [Example 2]

### Polymerization of 2-hydroxyethyl methacrylic acid utilizing the macro initiator (B)

The polypropylene macro initiator (B) of 15 g obtained in Example 1 and xylene of 250 ml were put in a glass reaction vessel with an internal volume of 500 ml in which a nitrogen substitution was carried out sufficiently. Subsequently, 2-hydroxyethyl methacrylic acid (HEMA) of 4.3 ml as a monomer to configure a polar polymer segment, copper (I) bromide of 0.13 g as a polymerization catalyst, and PMDETA of 0.37 ml as a co-catalyst were added to the above solution, and a polymerization was carried out at a room temperature for 4 hours. The reaction liquid was filtered, and an obtained polymer was washed by methanol and was dried under a reduced pressure to obtain a solid state polymer of 18.8 g. From a 1H-NMR analysis, it was found that a composition ratio of PP/poly (HEMA) was 80/20 (wt%).

### [Example 3]

### Polymerization of 2-hydroxyethyl methacrylic acid utilizing the macro initiator (B)

The polypropylene macro initiator (B) of 15 g obtained in Example 1 and xylene of 250 ml were put in a glass reaction vessel with an internal volume of 500 ml in which a nitrogen substitution was carried out sufficiently. Subsequently, HEMA of 16.7 ml as a monomer to configure a polar polymer segment, copper (I) bromide of 0.13 g as a polymerization catalyst, and PMDETA of 0.37 ml as a co-catalyst were added to the above solution, and a polymerization was carried out at a room temperature for 4 hours. The reaction liquid was filtered, and an obtained polymer was washed by methanol and was dried under a reduced pressure to obtain a solid state polymer of 31.5 g. From a 1H-NMR analysis, it was found that a composition ratio of PP/poly (HEMA) was 46/54 (wt%).

### [Example 4]

### Polymerization of methyl methacrylate utilizing the macro initiator (B)

The polypropylene macro initiator (B) of 15 g obtained in Example 1 and xylene of 100 ml were put in a glass reaction vessel with an internal volume of 500 ml in which a nitrogen substitution was carried out sufficiently, and heated and stirred at 100°C for dissolving. Subsequently, methyl methacrylate (MMA) of 9.5 ml as a monomer to configure a polar polymer segment, copper (I) bromide of 0.13 g as a polymerization catalyst, and PMDETA of 0.37 ml as a co-catalyst were added to the above solution, and a polymerization was carried out at 100°C for 4 hours. The reaction liquid was poured into methanol of 1 L, and a deposited polymer was dried under a reduced pressure to obtain a solid state polymer of 18.3 g. From a 1H-NMR analysis, it was found that a composition ratio PP/PMMA was 81/19 (wt%).

### [Example 5]

### Polymerization of methylmethacrylate utilizing the macro initiator (B)

The polypropylene macro initiator (B) of 15 g obtained in Example 1 and xylene of 100 ml were put in a glass reaction vessel with an internal volume of 500 ml in which a nitrogen substitution was carried out sufficiently, and heated and stirred at 100°C for dissolving. Subsequently, MMA of 26.6 ml as a monomer to configure a polar polymer segment, copper (I) bromide of 0.13 g as a polymerization catalyst, and PMDETA of 0.37 ml as a co-catalyst were added to the above solution, and a polymerization was carried out at 100°C for 4 hours. The reaction liquid was poured into methanol of 1 L, and a deposited polymer was dried under a reduced pressure to obtain a solid state polymer of 25.2 g. From a 1H-NMR analysis, it was found that a composition ratio PP/PMMA was 57/43 (wt%).

### INDUSTRIAL APPLICABILITY

The polyolefin hybrid polymer in accordance with the present invention and the thermoplastic resin composition containing the polyolefin hybrid polymer are provided with excellent properties. Consequently, as described above, they can be used for many kinds of applications such as a film, a sheet, a microcapsule, PTP packaging, a modifier for a rubber, a modifier for lubricating oil, a floor covering material, and an electric insulating material for electric and electronic components, and can be utilized in the industrial fields such as agriculture, medical care, petroleum, building construction, civil engineering, electricity, and electronics.

## Claims

1. A polyolefin hybrid polymer composed of a polyolefin segment and a polar polymer segment, wherein the polyolefin hybrid polymer is a modified compound of maleic polyolefin (A) selected from a group composed of the following (A1) and (A2), comprising a constitutional unit represented by the general formula (I): 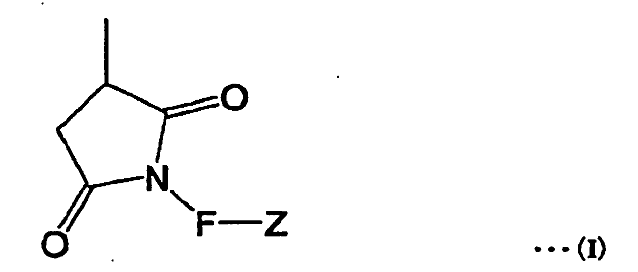 wherein Z represents a polar polymer segment obtainable by polymerizing monomers of at least one kind selected from organic compounds having at least one carbon-carbon unsaturated bond, and F represents a group including an unsaturated bond.
(A1) Maleate of a homopolymer or a copolymer of an α-olefin compound represented by CH₂=CH-CₓH₂ₓ₊₁ (x represents 0 or a positive integer number); and
(A2) Maleate of a copolymer of an α-olefin compound represented by CH₂=CH-CₓH₂ₓ₊₁ (x represents 0 or a positive integer number) and cyclic olefin represented by the general formula (II): 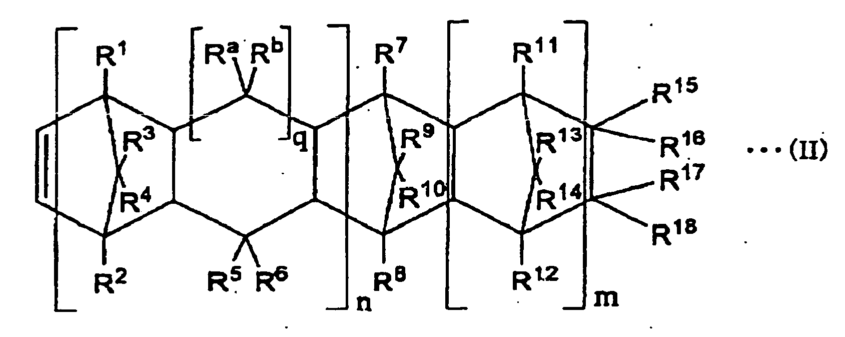 wherein n represents 0 or 1, m represents 0 or a positive integer number, q represents 0 or 1, R¹ to R¹⁸ and R^{a} and R^{b} represent an atom or a group selected from a group composed of a hydrogen atom, halogen atoms, and hydrocarbon groups independently of each other, R¹⁵ to R¹⁸ can form a monocyclic or a polycyclic ring by combining with each other, the group of the monocyclic or the polycyclic ring can include a double bond, and R¹⁵ and R¹⁶ or R¹⁷ and R¹⁸ can form an alkylidene group.

2. The polyolefin hybrid polymer as defined in claim 1, wherein the group represented by F contains a group selected from a carbonyl group, a cyano group, a sulfonyl group, and an aryl group in the general formula (I), and the unsaturated group is linked to a polar polymer segment (Z) in such a manner that one carbon atom is interposed.

3. The method for manufacturing the polyolefin hybrid polymer as defined in claim 1 or 2, comprising the sequential steps of the following (process 1) and (process 2):
(Process 1) converting maleic polyolefin (A) to a macro initiator (B) by imparting a group provided with a radical polymerization initiating ability to the maleic polyolefin (A); and
(Process 2) carrying out a radical polymerization of monomers of at least one kind selected from organic compounds having at least one carbon-carbon unsaturated bond under the existence of the macro initiator (B) obtained in (Process 1).

4. A thermoplastic resin composition comprising the polyolefin hybrid polymer as defined in claim 1 or 2.

5. A film, a sheet, an adhesive resin, a compatibilization agent, a resin modifier, a resin additive, a filler dispersing agent, or a dispersing element including the polyolefin hybrid polymer as defined in claim 1 or 2.

6. A film, a sheet, an adhesive resin, a compatibilization agent, a resin modifying agent, a resin addition agent, a filler dispersing agent, or a dispersing element including the thermoplastic resin composition as defined in claim 4.

## Patentansprüche

1. Polyolefinhybridpolymer, bestehend aus einem Polyolefinsegment und einem polaren Polymersegment, wobei das Polyolefinhybridpolymer eine modifizierte Verbindung eines Maleinpolyolefins (A) ist, ausgewählt aus einer Gruppe, bestehend aus den folgenden (A1) und (A2), umfassend eine konstitutionelle Einheit der allgemeinen Formel (I): 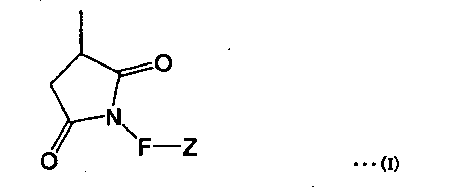 wobei Z ein polares Polymersegment darstellt, erhältlich durch Polymerisieren von Monomeren mindestens einer Art, ausgewählt aus organischen Verbindungen mit mindestens einer ungesättigten Kohlenstoff-Kohlenstoff-Bindung, und
F eine Gruppe umfassend eine ungesättigte Verbindung darstellt,
(A1) Maleat eines Homopolymers oder eines Copolymers einer α-Olefinverbindung, dargestellt durch CH₂=CH-CₓH₂ₓ₊₁ (x ist 0 oder eine positive ganze Zahl); und
(A2) Maleat eines Copolymers einer α-Olefinverbindung, dargestellt durch CH₂=CH-CₓH₂ₓ₊₁ (x ist 0 oder eine positive ganze Zahl) und zyklisches Olefin der allgemeinen Formel (II): 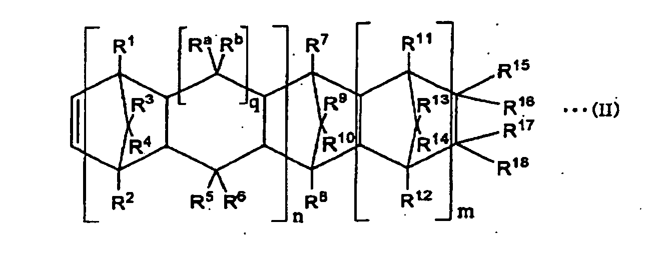 wobei n 0 oder 1 ist, m 0 oder eine positive ganze Zahl ist, q 0 oder 1 ist, R¹ bis R¹⁸ und R^{a} und R^{b} ein Atom oder eine Gruppe sind, ausgewählt aus der Gruppe, die unabhängig voneinander aus einem Wasserstoffatom, Halogenatomen, und Kohlenwasserstoffgruppen besteht, wobei R¹⁵ bis R¹⁸ durch Verbindung miteinander einen monozyklischen oder einen polyzyklischen Ring bilden können, wobei die Gruppe des monozyklischen oder des polyzyklischen Ringes eine Doppelbindung umfassen kann, und R¹⁵ und R¹⁶ oder R¹⁷ und R¹⁸ eine Alkylidengruppe bilden können.

2. Polyolefinhybridpolymer wie in Anspruch 1 definiert, wobei die durch F dargestellte Gruppe aus einer Gruppe besteht, ausgewählt aus einer Carbonylgruppe, einer Cyanogruppe, einer Sulfonylgruppe, und einer Arylgruppe der allgemeinen Formel (I), und die ungesättigte Gruppe mit einem polaren Polymersegment (Z) verbunden ist, so dass sich ein Kohlenstoffatom dazwischen befindet.

3. Verfahren zur Herstellung des Polyolefinhybridpolymers wie in Anspruch 1 oder 2 definiert, umfassend die sequenziellen Schritte der folgenden (Verfahren 1) und (Verfahren 2):
(Verfahren 1) Umwandlung von Maleinsäurepolyolefin (A) in einen Makro-Initiator (B) durch Erzeugung einer Gruppe mit einer durch radikale Polymerisation initiierten Eignung zur Maleinsäurepolyolefin (A); und
(Verfahren 2) Durchführen einer radikalen Polymerisation von Monomeren mindestens einer Art, ausgewählt aus organischen Verbindungen mit mindestens einer ungesättigten Kohlenstoff-Kohlenstoff-Bindung bei Vorhandensein des in (Verfahren 1) erhältlichen Makro-Initiators (B).

4. Thermoplastische Harzzusammensetzung, umfassend das Polyolefinhybridpolymer, wie in Anspruch 1 oder 2 definiert.

5. Folie, Platte, Klebstoffharz, Kompatibilisierungsmittel, Harzmodifizierer, Harzadditiv , Füllstoff-Dispergiermittel, oder Dispersionselement, umfassend das Polyolefinhybridpolymer, wie in Anspruch 1 oder 2 definiert.

6. Folie, Platte, Klebstoffharz, Kompatibilisierungsmittel, Harzmodifiziermittel, Harzzusatzmittel, Füllstoff-Dispergiermittel, oder Dispersionselement, umfassend die thermoplastische Harzzusammensetzung, wie in Anspruch 4 definiert.

## Revendications

1. Polymère hybride à base de polyoléfine, composé d'un segment polyoléfine et d'un segment polymère polaire, lequel polymère hybride à base de polyoléfine est un composé obtenu par modification d'un dérivé maléique de polyoléfine (A), choisi dans l'ensemble formé par les dérivés (A1) et (A2) définis ci-dessous, et comprenant des motifs constitutifs représentés par la formule générale (I) : 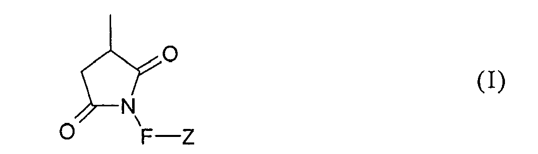 dans laquelle Z représente un segment polymère polaire, accessible par polymérisation de monomères d'au moins un type, choisis parmi les composés organiques dotés d'au moins une liaison carbone-carbone insaturée, et F représente un groupe comportant une liaison insaturée ; étant entendu que :
(A1) désigne les dérivés de type maléate d'un homopolymère ou d'un copolymère d'une alpha-oléfine représentée par la formule CH₂=CH-CₓH₂ₓ₊₁ où l'indice x est un nombre entier positif ou nul ;
et (A2) désigne les dérivés de type maléate d'un copolymère d'une alpha-oléfine représentée par la formule CH₂=CH-CₓH₂ₓ₊₁ où l'indice x est un nombre entier positif ou nul et d'une oléfine cyclique représentée par la formule générale (II) : 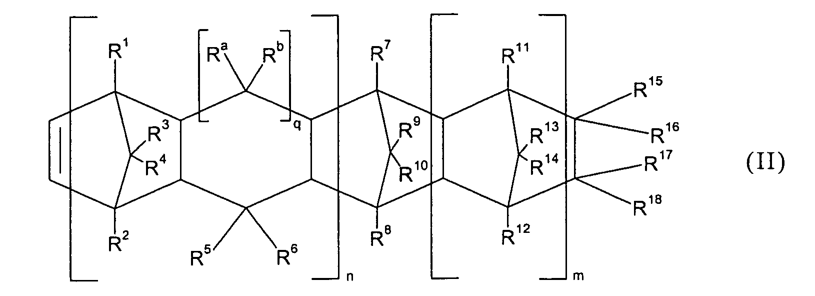
dans laquelle l'indice n vaut 0 ou 1, l'indice m est un nombre entier positif ou nul, l'indice q vaut 0 ou 1, et les symboles R¹ à R¹⁸ et R^{a} et R^{b} représentent chacun, indépendamment les uns des autres, un atome ou un groupe choisi dans l'ensemble formé par les atomes d'hydrogène et d'halogène et les groupes dérivés d'hydrocarbure, étant entendu que les entités représentées par R¹⁵ à R¹⁸ peuvent constituer, par combinaison de l'une avec une autre, un groupe monocyclique ou polycyclique qui peut comporter une double liaison, et que les entités représentées par R¹⁵ et R¹⁶ ou par R¹⁷ et R¹⁸ peuvent former conjointement un groupe alkylidène.

2. Polymère hybride à base de polyoléfine, conforme à la revendication 1, dans lequel le groupe représenté par F dans la formule générale (I) comporte un groupe choisi parmi les groupes carbonyle, cyano, sulfonyle et aryle, et ce groupe insaturé est rattaché au segment polymère polaire Z de telle manière qu'il y a un seul atome de carbone interposé.

3. Procédé de préparation d'un polymère hybride à base de polyoléfine défini dans la revendication 1 ou 2, lequel procédé comporte les étapes successives suivantes 1 et 2 :
étape 1 : convertir un dérivé maléique de polyoléfine (A) en un macro-amorceur (B), en introduisant dans un dérivé maléique de polyoléfine (A) un groupe doté d'un pouvoir d'amorçage de polymérisation radicalaire ;
étape 2 : réaliser, en présence du macro-amorceur (B) obtenu au cours de l'étape 1, une polymérisation radicalaire de monomères d'au moins un type, choisis parmi les composés organiques dotés d'au moins une liaison carbone-carbone insaturée.

4. Composition de résine thermoplastique, comprenant un polymère hybride à base de polyoléfine, défini dans la revendication 1 ou 2.

5. Film, feuille, résine adhésive, agent de compatibilisation, agent de modification de résine, adjuvant de résine, agent de dispersion de charge ou élément dispersant, comprenant un polymère hybride à base de polyoléfine défini dans la revendication 1 ou 2.

6. Film, feuille, résine adhésive, agent de compatibilisation, agent de modification de résine, adjuvant de résine, agent de dispersion de charge ou élément dispersant, comprenant une composition de résine thermoplastique définie dans la revendication 4.
